# EUROPEAN PATENT SPECIFICATION

(11) **EP 3 748 237 B1**
(45) Date of publication and mention of the grant of the patent: **19.07.2023**
(21) Application number: 20178357.8
(22) Date of filing: 04.06.2020
(51) Int. Cl.: F24C 15/32, A47J 27/04

(54) **APPARATUS FOR COOKING FOOD AND METHOD FOR GENERATING STEAM**
VORRICHTUNG ZUM KOCHEN VON LEBENSMITTELN UND VERFAHREN ZUR DAMPFERZEUGUNG
APPAREIL DE CUISSON D'ALIMENTS ET PROCÉDÉ POUR GÉNÉRER DE LA VAPEUR

(30) Priority: 04.06.2019 IT 201900008034; 04.06.2019 IT 201900008037
(43) Date of publication of application: 09.12.2020
(73) Proprietor: Atihc S.r.l., 37045 Legnago Verona (IT)
(72) Inventor: COLTRO, Marco, 37045 Legnago Verona (IT); SUMAN, Alessio, 37045 Legnago Verona (IT); VERZÈ, Ivan, 37045 Legnago Verona (IT)
(74) Representative: Manzella & Associati

(56) References cited:
- EP-A1- 0 360 715
- JP-A- 2007 010 190
- JP-A- 2007 032 889
- JP-A- 2007 321 993
- JP-A- 2008 048 740
- JP-A- 2008 185 293

## Description

### Technical field

The present invention relates to an apparatus for cooking food and a method for generating steam.

### Prior art

The use of different types of apparatuses for cooking food, which may be classified according to multiple criteria, such as, for example, the type of energy used, or based on the type of cooking used, has long been known.

A common type of apparatus is the convection oven, which uses hot air which circulates with a forced convection motion inside a cooking chamber, where the food to be heated or cooked is arranged.

A disadvantage related to thermal convection cooking concerns the fact that oxygen is present in the cooking chamber and this may cause oxidation of the vitamins contained in food at cooking temperatures, which are generally higher than 35° C. Furthermore, a thermal convection oven requires rather long cooking times and this feature, in combination with the above cooking temperatures, may cause the appearance of harmful and/or toxic substances for the body.

In order to preserve the quality of the food, and, in particular, not to alter the nutritional properties of the food, apparatuses has been designed having alternative cooking methods, such as steam ovens, to be implemented.

Steam cooking has the advantage of limiting the degradation of the nutritional elements of food and improving the maintenance of aromas and aesthetic features.

Patent application EP 1970634 shows a type of steam oven. The oven comprises a cooking chamber inside which a series of heating elements and at least an atomizer are arranged, designed to introduce a predetermined quantity of atomized water near a heating element or in direct contact with a heating element to generate steam. The heating elements are arranged in a region of the cooking chamber which is separate from the region in which the food is inserted, and one or more convectors are designed to facilitate the transmission of heat between the two regions. The oven includes a control unit configured to implement certain heating cycles, by controlling the heating elements, which is based on the detection of the temperature.

Apparatuses for cooking food with superheated steam, generally called superheated steam ovens have also been designed.

A type of superheated steam oven comprises a casing which forms inside a cooking chamber in which the food is arranged. The casing is associated with a steam generator, which is connected to a steam superheater device. The steam superheater device is connected with the cooking chamber to introduce the heated steam into the chamber at a temperature higher than the boiling temperature, which is generally called superheated steam. JP 2007 010190A discloses a cooking device with a cooking chamber wherein superheated steam cooking may be performed.

A problem complained in the sector is that the steam used for cooking, once it has transferred the energy to the food, is discharged outside the cooking chamber and is replaced by steam generated once again by the steam generation device, with a consequent waste of energy.

The need is therefore felt to devise an apparatus for cooking food with steam which allows food to be cooked optimally and which, at the same time, guarantees energy saving.

### Disclosure

The present invention aims at solving the mentioned problems by devising an apparatus for cooking food with superheated steam, which reduces the consumption of energy necessary for its operation.

Within this aim, a further object of the present invention is to provide an apparatus for cooking food with superheated steam, which optimally preserves the nutritional properties of the food and its healthiness.

A still further object of the present invention is to devise an apparatus for cooking food with efficient superheated steam.

The invention further aims at providing an apparatus for cooking food with superheated steam, which is of a simple constructive and functional concept, which is certainly reliable in operation, versatile in use, and relatively inexpensive.

The mentioned objects are achieved, according to the present invention, by the apparatus for cooking food with superheated steam according to claim 1, by the method for controlling the generation of steam according to claim 12 and by the computer program according to claim 13.

The apparatus for cooking food with superheated steam includes an external casing, including inside a cooking chamber, suitable for containing one or more foods; a steam generating device capable of vaporizing a liquid; a superheating device of said steam associated with said steam generating device, said superheating device being configured to heat said steam up to an operating temperature higher than the boiling temperature of said liquid and to enable said superheated steam to come out towards said cooking chamber; a recirculation means of the exhausted steam present, in use, in said cooking chamber, said recirculation means being communicating with said cooking chamber and being configured to convey said exhausted steam from said cooking chamber to said superheating device, so as to heat said exhausted steam to said operating temperature and place it in said cooking chamber.

The apparatus also comprises a control unit comprising an electronic processor and a memory readable by said electronic processor, said memory comprising data relating to the composition of said fluid circulating in said cooking chamber, said data comprising the concentration of oxygen present in said cooking chamber, said control unit being configured to control said steam generating device and said superheating device on the basis of said data of concentration of oxygen.

Preferably said control unit is configured to control said steam generating device and said superheating device so as to maintain an oxygen concentration in said cooking chamber below a predetermined limit value.

Preferably, said memory also comprises data relating to the duration of the phases of at least one cooking process and/or data relating to certain thermo-fluid dynamic characteristics of said fluid.

It should be noted that the provision of a control unit that manages the generation of steam based on the concentration of oxygen present in the cooking chamber and, in particular, which maintains a desired concentration of oxygen in the cooking chamber, allows for optimal preservation of the nutritional properties of foods and their healthiness.

It is to be noted that the provision of means of recirculation of the exhausted steam enables the energy consumption to be reduced since the amount of energy necessary to bring the exhausted steam to the operating temperature is lower than the energy necessary to bring the liquid to the state of superheated steam. More specifically, it is observed that in order to bring the exhausted steam into the superheating device at operating temperature, it is sufficient to supply it with the energy it previously transferred to the food, while, in order to obtain superheated steam starting from the liquid contained in the device for generating the steam, it is necessary to supply the energy to evaporate it and the energy to superheat it. The total energy for evaporation and superheating to be supplied to the liquid is higher than the energy transferred by the exhausted steam to the food.

Furthermore, energy savings are linked to the reduction of the consumption of liquid for generating superheated steam, given that part of the superheated steam is obtained by recovering the exhausted steam.

Preferably, said apparatus comprises sensor means, arranged at said cooking chamber.

Preferably said sensor means are configured to acquire data relating to composition of said circulating fluid in said cooking chamber.

Preferably, said sensor means comprise at least one oxygen sensor.

Preferably, said sensor means also comprise sensors configured to detect data relating to the thermo-fluid dynamic characteristics of said fluid, such as, for example, temperature sensors.

According to the invention, said recirculation means comprise at least a recirculation conduit, configured to convey said exhausted steam from said cooking chamber to said superheating device.

Said apparatus comprises a valve means associated with said at least one recirculation conduit, said valve means being capable of adjusting the quantity of exhausted steam to be conveyed to the inlet of said overheating device on command of said control unit.

Said control unit is configured to send a command signal to said valve means based on said oxygen concentration measured in said cooking chamber.

Preferably, said valve means is movable, on command of the control unit, between an open configuration, in which it allows the passage of the exhausted steam from said cooking chamber to said superheating device, and a closed configuration, in which it blocks the passage of the exhausted steam from said cooking chamber towards the superheating device.

According to an aspect of the invention, the valve means comprises a valve equipped with a shutter which can be actuated by the control unit to adjust the quantity of exhausted steam passing through the recirculation conduit.

Preferably, the control unit is configured to control the generation of steam on the basis of the data relating to the concentration of oxygen, alternatively controlling the actuation of the steam generating device, to generate new steam to be superheated and introduced into the cooking chamber, or the activation of the valve means in the open configuration for re- energizing the exhausted steam and introducing it again into the cooking chamber. It should be noted that the fact that the control unit activates the valve means in the open configuration to let the exhausted steam pass through the recirculation conduit to the superheating device allows an energy saving, as well as a saving of the quantity of liquid as no new steam is generated. Furthermore, these characteristics also allow a rapid response to the variation of oxygen in the cooking chamber to be obtained since it takes less time to heat the exhausted steam than the time required to generate new steam and superheat it.

Preferably said at least one recirculation conduit is connected, at one end, to a recovery opening made on a wall of said cooking chamber.

Preferably said at least one recirculation conduit comprises a first portion, which develops starting from said recovery opening, above said cooking chamber, and a second portion, which extends in a region comprised between said compartment and said casing.

Preferably said at least one recirculation conduit extends outside said compartment.

Preferably said recovery opening is made on a wall of said cooking chamber, at a region of said cooking chamber in which said fluid has worse predetermined thermo-fluid dynamic characteristics than the characteristics of said fluid circulating in the remaining regions of said cooking chamber, in a steady state of operation of said apparatus.

Preferably said thermo-fluid dynamic characteristics include the temperature of the fluid and/or the average speed of the fluid and/or the percentage of oxygen.

It has been observed, from the results of thermo-fluid dynamic studies on the fluid circulating in said cooking chamber, during a phase of steady state operation of said apparatus, that the exhausted steam is concentrated in the region or regions where the thermo- fluid dynamic characteristics of the circulating fluid are worse than the corresponding characteristics of the fluid in the remaining regions of the chamber.

Preferably said recovery opening is made in the region or in one of the regions of said chamber wherein said fluid has the lowest average speed value with respect to the average speed values of said fluid in the remaining regions of the chamber.

According to an aspect of the invention, said recovery opening is made on a top wall of said cooking chamber.

The cooking chamber is suitable to contain, during the operation of said apparatus, a fluid comprising steam.

In a steady state operation of the apparatus, said fluid substantially comprises steam or the fluid comprises vapor mixed with gas, such as oxygen and nitrogen, mainly.

Preferably said casing comprises a compartment which forms said cooking chamber.

Preferably between said compartment and said cooking chamber a region for distributing said fluid is defined, which forms a path for guiding the flow of the fluid towards said cooking chamber.

Preferably said compartment comprises a ventilation device, arranged in said distribution region.

Preferably, said ventilation device can be actuated to circulate said fluid in said cooking chamber. Preferably said ventilation device creates, in use, a pressure gradient in said cooking chamber which enables said exhausted steam to be conveyed in said recirculation means.

Preferably, said ventilation device comprises a first rotating member, mounted on a rotation shaft, which is rotated by an actuator member.

Preferably said rotation shaft extends in a substantially horizontal direction.

Advantageously, said ventilation device comprises a second rotating member, arranged coaxially to said first rotating member.

Preferably, said superheating device is arranged outside of said compartment. This arrangement is advantageous since the superheating device does not interfere with the distribution of the fluid in the cooking chamber and does not alter the temperature in the cooking chamber.

It is also an object of the present invention a method for controlling the generation of steam which comprises, in an initial phase, the step of generating steam by means of said steam generating device.

The method provides for measuring the concentration of oxygen present in said cooking chamber.

If the oxygen concentration measured in said cooking chamber is lower than a limit value of oxygen concentration stored in said memory of said control unit, the method provides for deactivating said steam generating device and, at the same time, for sending to said valve means, by means of said control unit, a control signal to operate it in an open configuration, suitable to allow the passage of exhausted steam from said cooking chamber to said superheating device.

The method then provides for heating said exhausted steam by means of said superheating device to insert it again into said cooking chamber.

If, on the other hand, the oxygen concentration measured in said cooking chamber is higher than said limit value of oxygen concentration stored in said memory, the method provides for sending to said valve means, by means of said control unit, a control signal for operating it in a closed configuration, suitable for blocking the passage of exhausted steam from said cooking chamber to said superheating device.

The method provides for activating said steam generating device to generate new steam and heating said steam by means of said superheating device to introduce it into said cooking chamber.

The method provides for repeating the operating steps until the cooking process is completed.

Preferably, said method provides for continuously measuring the concentration of oxygen present in said cooking chamber.

The present invention also relates to a computer program comprising instructions which, when executed by the electronic processor, cause the apparatus according to any one of the claims 1-9 to perform the steps of the method for generating steam.

According to an aspect of the invention, said compartment has a substantially trapezoidal cross-section in order to facilitate the circulation of the fluid towards the cooking chamber and also to make uniform the distribution of the fluid inside the cooking chamber. It should be noted that the optimal distribution of the fluid offsets any temperature inhomogeneities inside said cooking chamber.

Preferably, said compartment has a trapezoidal-based prism shape.

Preferably, said compartment has a cross section having a mixtilinear trapezoidal shape. In particular, said cross section comprises a series of straight sections and a series of curved arches which connect said straight sections. The trapezoidal configuration of said compartment including said curve arches has the effect of minimizing the volume of the compartment and, therefore, of allowing oxygen to come out from the compartment in the shortest possible time. Furthermore, this configuration has the effect of preventing oxygen stagnation zones from forming in the corners, which may reduce the benefits of cooking with superheated steam. Finally, this configuration enables the exposure of a surface of minor extension to the flow of superheated steam, limiting the formation of condensation and helping the interaction between the superheated steam and the food.

It must be considered that the smaller the volume of the compartment, the greater the speed with which oxygen is replaced with superheated steam, with the same steam generation capacity.

Preferably said curve arches, which make rounded corners of said compartment, are present along the entire vertical development of said compartment.

Preferably, said apparatus comprises a series of distributing elements associated with at least one wall of said compartment, which contribute to improving the distribution of the superheated steam.

Preferably each distributor element is made up of a fin.

Preferably said fins are associated with a pair of opposite walls of said compartment.

Preferably said fins are distributed uniformly on each said wall.

Preferably said fins are arranged on each wall adjacent to each other along a longitudinal direction, in particular along the vertical development of said compartment.

Preferably said fins are distributed so as to form a series of rows which are substantially parallel along a transverse direction, which corresponds to the depth of said compartment.

Preferably, said apparatus comprises a pair of conveying members conforming opposite walls of said cooking chamber, said conveying members being arranged in said compartment and being spaced from respective walls of said compartment so as to define respective lateral portions of said distribution region.

Preferably said conveying members form a pair of lateral walls of said cooking chamber.

Preferably each said lateral portion of said distribution region has a cross section which progressively decreases along the depth of said cooking chamber, so as to uniformly distribute said steam in said cooking chamber. This configuration of said side portions minimizes the pressure losses suffered by said fluid.

Preferably each said lateral portion of said distribution region has a substantially trapezoidal plan. The conformation of each lateral portion of said distribution region, in particular the progressive reduction of the cross-sectional area, allows an approximately constant speed of the fluid along the lateral portion to be obtained. In this way, a homogeneous distribution of the fluid in the chamber is ensured.

Preferably each said conveying member comprises a plurality of openings for the passage of said fluid from said relative lateral portion of said distribution region into said cooking chamber.

Preferably said openings are regularly distributed on the surface of each said conveying member.

Preferably, at least one support element, suitable for supporting a relative food containment member, such as, for example, a pan, is associated with each conveyor member.

Preferably, said apparatus comprises a plurality of support elements.

Preferably, said apparatus also comprises a protection member arranged in said compartment.

Preferably said protection member forms a wall of said cooking chamber.

Preferably, said protection member is arranged in front of said ventilation device.

Preferably said protection member is connected to said conveying members.

Preferably on a wall of said compartment an opening is formed for inlet of said superheated steam in said distribution region of said compartment. Said inlet opening is separated from said recovery opening of exhausted steam by said conveying members and by said protection member so as to prevent that the superheated steam is reenergized before having transferred energy to the products.

Preferably, said apparatus comprises deflector members arranged at the bending areas of said distribution region, said deflector members being configured to facilitate the circulation of said fluid through said distribution region, contrasting the formation of stagnation areas of said fluid in the path towards said cooking chamber.

### Description of drawings

The details of the invention will become clearer from the detailed description of a preferred embodiment of the apparatus for cooking food with superheated steam according to the invention, illustrated only by way of non-limitative example in the accompanying drawings, where:

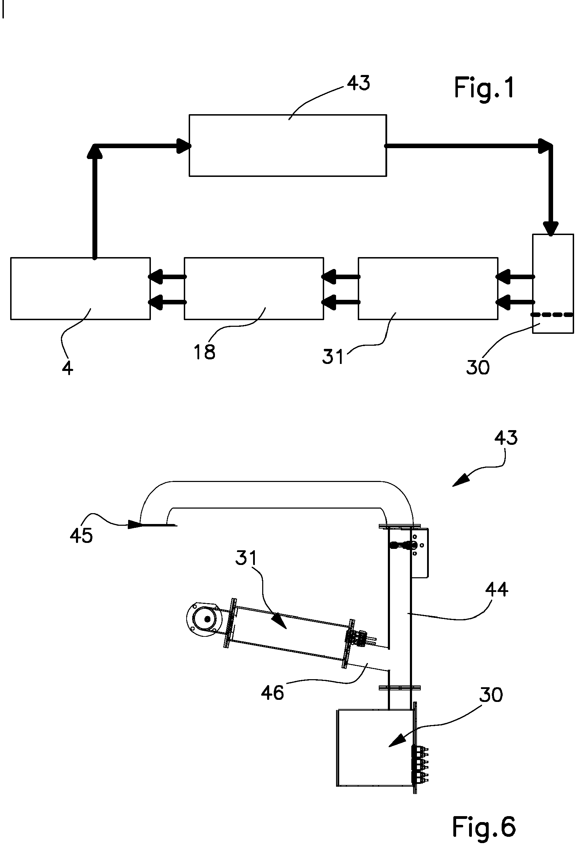

Figure 1 shows a block diagram of the apparatus object of the present invention;

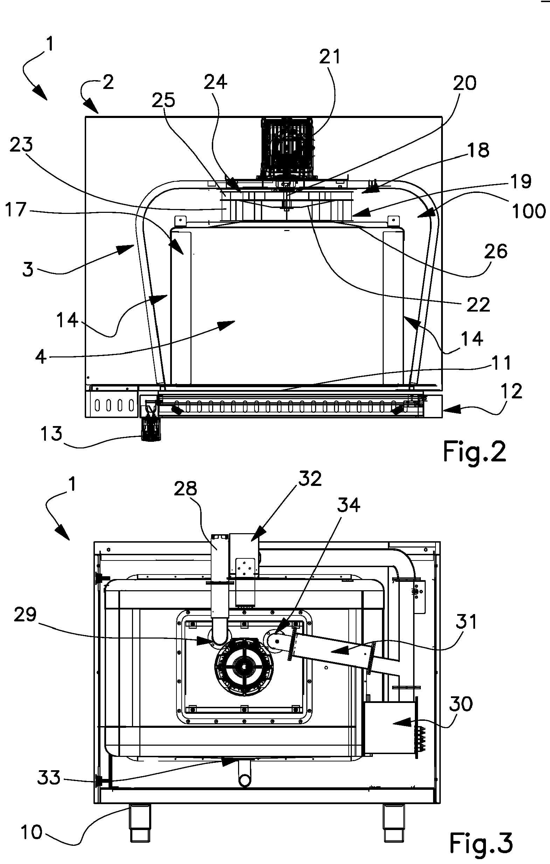

Figure 2 shows a top view of the apparatus according to the present invention, wherein an external casing is shown in transparency;
Figure 3 shows a front view of the apparatus wherein the external casing is shown in transparency;
Figure 4 shows a perspective view of a detail of the apparatus;
Figure 5 shows a perspective view of the detail of the apparatus illustrated in Figure 4, wherein further components are visible;
Figure 6 shows a front view of some components of the apparatus in a mounting configuration.

### Best mode

With particular reference to these figures, the reference number 1 indicates the apparatus for cooking food with superheated steam according to the present invention, which is also called apparatus, for simplicity.

The apparatus 1 comprises an external casing 2 comprising a compartment 3, suitable for containing one or more foods.

More specifically, the compartment 3 internally defines a cooking chamber 4 in which the food to be cooked or heated is arranged.

The casing 2 preferably has a prismatic shape but it is possible to provide for any other shape.

The compartment 3 preferably has a trapezoidal cross-section. The shape of the compartment 3, which is basically a trapezoidal-based prism, prevents the formation of areas of stagnation of a fluid contained inside thereof, thus facilitating the circulation of the fluid in the cooking chamber 4.

Advantageously the compartment 3 has a cross section with a mixtilinear trapezoidal shape, that is, it includes a series of straight sections and a series of curve arches, in which the straight sections are connected by the curve arches. The trapezoidal configuration of compartment 3 including the curve arches has the effect of minimizing the volume of compartment 3 and, therefore, of allowing oxygen to come out from compartment 3 in the shortest possible time. Furthermore, this configuration has the effect of preventing oxygen stagnation zones from forming in the corners, which may reduce the benefits of cooking with superheated steam. Finally, this configuration enables the exposure of a surface of minor extension to the flow of superheated steam, limiting the formation of condensation and helping the interaction between the superheated steam and the food.

The curved arches create rounded corners of compartment 3 and are present along the entire vertical development of said compartment 3.

The fluid includes steam during the operation step of the apparatus.

In a steady state operation step of the apparatus, the fluid mainly comprises steam, or steam mixed with gas, such as mainly oxygen and nitrogen.

Preferably the steam used is water steam.

In particular, the compartment 3 is delimited by a first wall 5, which forms the base, a second top wall 6, opposed to the first wall 5, a third wall 7 and a fourth wall 8 mutually facing each other, which define the oblique sides of the trapezoidal based prism. The compartment 3 is also delimited by a further wall 9, substantially orthogonal to the first wall 5, which is considered as a rear wall in the following description.

The compartment 3, in use, is closed by a door associated with the casing 2, as specified below.

Preferably the walls 5, 6, 7, 8, 9 which delimit the compartment 3 are made as a single body. Alternatively, the walls 5, 6, 7, 8, 9 are integrally connected to each other.

The cooking chamber 4 may have a prismatic shape, even more preferably a parallelepiped shape.

The cooking chamber 4 is delimited by the base 5, by the top wall 6, by a protection member 29, arranged frontally to the rear wall 9 of compartment 3, and by a pair of conveying members 14, mounted inside the compartment 3. The conveyor members 14 and the protection member 29 are described below.

Between the compartment 3 and the cooking chamber 4 a region for distributing the fluid 100 is defined, which forms a guide path for the fluid flow towards the cooking chamber 4, in which the heating or cooking of the food take place, in use.

A supporting means 10 may be associated with the casing 2, for example of the type of a series of feet, suitable for supporting the apparatus resting on a work surface.

The casing 2 comprises an access opening 11 at the cooking chamber 4, to enable a user to access the chamber 4. The access opening 11 is preferably made on a wall of the casing 2 arranged frontally with respect to the rear wall 9 of the compartment 3.

The access opening 11 is closed, during the operation of the apparatus, by a door 12, to isolate the cooking chamber 4 from the external environment and avoid heat dispersion.

The door 12 is hinged to the casing 2 or, alternatively, to the compartment 3, and is provided with a gripping member 13, preferably made by a handle, to facilitate the opening of the door 12.

The door 12 is made of a transparent material in order to allow viewing of the interior of the cooking chamber 4.

A control panel, not shown, is preferably associated with the external casing 2 comprising a series of controls, of the type of knobs or buttons, or a touch screen, to allow the switching on and off of the apparatus, as well as the adjustment of certain parameters such as, for example, the temperature or the cooking time.

The compartment 3 comprises a pair of conveying members 14, mounted spaced from relative opposite walls of the compartment 3, in particular from the third wall 7 and from the fourth wall 8.

A lateral portion of the distribution region 100, which is shaped so as to ensure an optimal distribution of the fluid inside the cooking chamber 4, is delimited between each conveying member 14 and the relative wall 7, 8 of the compartment 3.

Each lateral portion of the distribution region 100 has a cross section which progressively decreases along the depth of the cooking chamber 4.

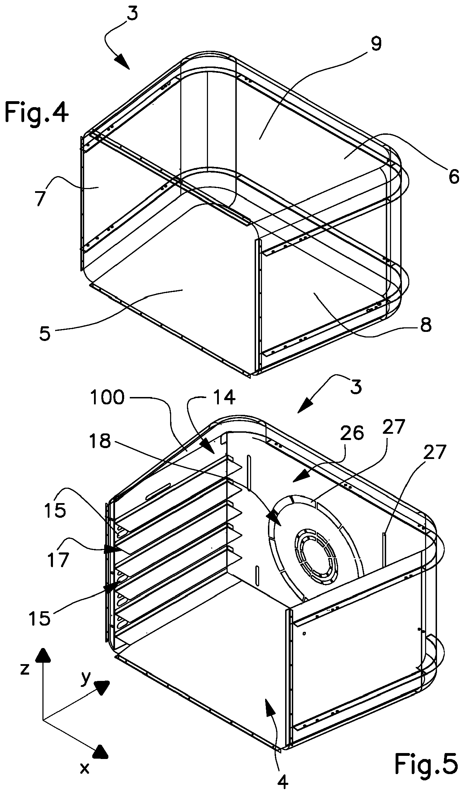

According to the spatial reference system illustrated in Figure 5, the depth of the cooking chamber 4 is a dimension substantially parallel to the y axis. Preferably each side portion of the distribution region 100 has a substantially trapezoidal plan.

The conformation of each lateral portion of the distribution region 100, in particular the progressive reduction of the cross-sectional area, allows an approximately constant speed of the fluid along the lateral portion to be obtained. In this way, a homogeneous distribution of the fluid in the chamber 4 is guaranteed, which is suitable to offset any lack of homogeneity in the distribution of the temperature inside the chamber 4.

It is possible to provide that suitable deflector members, not shown in the figures, are positioned in the areas of curvature of the distribution region 100. The deflector members facilitate the circulation of the fluid through the distribution region 100, counteracting the formation of areas of stagnation of the fluid in the path towards the cooking chamber 4.

Preferably each conveying member 14 is made up of a plate, which is arranged substantially orthogonal to the rear wall 9 of the compartment 3.

Each conveying member 14 shapes a plurality of openings 15, configured to enable a uniform distribution of the flow of fluid in the cooking chamber 4, in particular along the depth of the cooking chamber 4.

The openings 15 are regularly distributed on the surface of each conveying member 14.

Preferably the openings 15 are arranged adjacent along the depth of the cooking chamber 4, or along a direction parallel to the y axis.

At least one support element 17 is arranged on each plate 14, and is suitable for supporting a relative food containing member, such as, for example, a pan, which is not shown in the figures.

According to an embodiment, each support element 17 comprises a portion protruding from the respective plate 14, which defines a support surface for the containment member.

Preferably the apparatus comprises a plurality of support elements 17.

A set of distribution elements, not shown in the figures, which contribute to improve the distribution of the superheated steam, are mounted on opposite walls of the compartment 3, which delimit respective side portions of the distribution region, together with respective conveying members 14.

Preferably, each conveying element is made of a fin which protrudes from the compartment wall 3 towards the distribution region 100.

The fins are distributed uniformly on each wall of the compartment 3 and, in particular, are arranged adjacent along a longitudinal direction, forming a series of rows which extend substantially parallel along a transverse direction, which corresponds to the depth of the compartment. The compartment 3 houses inside of it a ventilation device 18.

The ventilation device 18 is arranged in the distribution region 100, preferably between the rear wall 9 of the compartment 3 and the cooking chamber 4.

The ventilation device 18 comprises a first impeller member 19, mounted on a substantially horizontal rotation shaft 20, which is driven in rotation by an actuator member 21.

The actuator member 21 includes an electric motor associated with the rear wall 9.

The first impeller member 19 comprises a discoidal body 22 from which a series of fins 23 develop, distributed on a peripheral circular rim of the discoidal body 22.

Coaxially to the first impeller member 19 a second impeller member 24 is mounted, which comprises a relative series of fins 25 which develop starting from the discoidal body 22. The fins 25 of the second rotating member 24 preferably have an extension along the y direction lower than the extension of the fins 23 of the first impeller member 19.

The provision of a pair of impeller members 19, 24 allows the fluid to circulate effectively inside the cooking chamber 4.

The ventilation device 18 creates a pressure gradient in the cooking chamber which is used to convey the exhausted steam from the chamber 4 towards the superheating device 31.

Exhausted steam means the steam which, during the operation of the apparatus, has transferred the stored energy to the food or to the cooking chamber 4.

The distribution region 100 may house a series of heating elements, for example of the type of electrical resistances, suitable for heating the fluid flowing in the distribution region 100 towards the cooking chamber 4.

The heating elements may be arranged near the ventilation device 18.

A protection member 26, which forms one of the walls of the cooking chamber 4, as already mentioned, is arranged in front of the ventilation device 18.

The protection member 26 consists of a plate on which a series of suction openings 27 of the fluid contained in the cooking chamber 4 are obtained.

More specifically, the plate 26 forms a preferably disk-shaped suction surface which includes the suction openings 27.

The suction openings 27 are shaped as portions of a circular rim and are arranged contiguous so that at least one circular rim is formed. The suction openings 27 may have a different shape, for example may be shaped as slots with straight development.

Preferably the suction openings 27 arranged on the periphery of the suction surface have a larger area than the suction openings 17 arranged centrally with respect to the same surface, to facilitate the suction at the end regions of the cooking chamber 4.

The suction surface extends at least up to the height of the support element 17, intended as a position along the z direction. If a plurality of support elements 17 are present, the suction surface extends at least from the height of the support element 17 positioned at one end of the relative conveying member 14, up to the support element 17 positioned at an opposite end of the conveying member 14.

The feature relating to the extension of the suction surface has the effect of facilitating the suction of the fluid at the pans positioned at the ends of the conveying members 14.

A substantially truncated cone-shaped element is associated at the rear of the plate 26, and is positioned in front of the ventilation device 18 and contributes to facilitate the aspiration by the ventilation device 18.

The cooking chamber 4 is associated with a cooling conduit 28, which protrudes, at least in part, outside the casing 2, to allow the entry of air from the external environment into the cooking chamber 4 and allow the cooling of the chamber 4.

The cooling conduit 28 is connected to an opening 29 made on the rear wall 9 of the cooking chamber 4, preferably near the ventilation device 18.

The cooling conduit 28 is provided with an adjustment member, not visible in the figures, which is operated by a control unit between a first configuration, in which it allows the passage of air in the cooling conduit 28 towards the cooking chamber 4, and a second configuration, in which the passage of air is blocked.

The control unit, also not visible in the figures, is designed for managing the apparatus, and is configured to send control signals to a steam generating device 30 and to a superheating device 31.

The control unit comprises an electronic processor and a memory readable by the electronic processor.

The control unit is configured to receive data from the sensor means and, on the basis of the data, to generate the control signals. The data sent by the sensor means may be stored in the memory.

The sensor means, not shown, may be configured to acquire data relating to predetermined thermo-fluid dynamic characteristics of the fluid, such as, for example, the temperature, and/or data relating to the composition of the fluid including the concentration of oxygen present in the cooking chamber 2.

The sensor means comprise at least one temperature sensor and at least one oxygen sensor.

Preferably the oxygen sensor is made by a lambda sensor located in the cooking chamber 4.

According to a preferred embodiment, the control unit is configured to control the steam generating device 30 and the superheating device 31 based on data provided by the at least one oxygen sensor.

The memory may also comprise data relating to the duration of the phases of at least one cooking process implemented by the apparatus. In this way, the control unit can control the operation of the steam generation device 30 and the superheating device 31 on the basis of these data relating to the time intervals of the phases of the cooking process.

The cooking chamber 4 is provided with a first exhaust opening 32, for coming out of the oxygen from the cooking chamber 4 towards the outside, during a start phase of the apparatus. An exhaust conduit is connected to the first exhaust opening 32.

The first exhaust opening 32 is preferably positioned on the top wall 6 of the chamber 4.

A second exhaust opening 33 is made on a wall of the cooking chamber 4, to release the condensed steam or liquid materials deriving from the food outwards.

Preferably the base 5 of the cooking chamber 4 has a portion with a downward inclination and, approximately at the center of the inclined portion, the second exhaust opening 33 is positioned, which collects the liquid material to convey it, by means of a special conduit, towards a collection means, not illustrated.

The collection means comprise a tank placed below the base 5.

Preferably, the tank is connected to the exhaust conduit, by means of special connection means, so as to direct the oxygen collected in the tank into the exhaust conduit so that it is expelled outwards.

In fact, it has been experimentally observed that oxygen has a higher density than that of superheated steam and tends to accumulate in an area arranged below, in use, or near the base 5 of the cooking chamber 4. The provision of connection means which connect the tank with the exhaust conduit enables the recovery of the oxygen that enters the tank through the second exhaust opening 33 and the discharge thereof.

Steam is introduced into the compartment 3 through at least one inlet opening 34, formed on the rear wall 9. The inlet opening 34 may be made near the ventilation device 18.

The steam is produced by the steam generating device 30, which is able to vaporize a liquid contained inside it.

Preferably the liquid used is water.

The steam generating device 30 is arranged outside the compartment 3, preferably housed in a region between the rear wall 9 of the compartment 3 and the casing 2.

The steam generating device 30 comprises a body which houses, inside thereof, one or more heating elements, suitable for heating a liquid to generate steam.

It is possible to provide that the apparatus comprises an additional steam generating device, which is capable of being operated to generate steam, where necessary.

The steam generating device 30 is associated with the superheating device 31, which is configured to heat the steam up to an operating temperature T higher than the boiling temperature of the liquid used.

Operating temperature T means the temperature at which the steam is introduced into the cooking chamber 4, which is approximately between 130° C and 600° C.

The superheating device 31 is arranged outside the compartment 3 and, therefore, outside the cooking chamber 4. The superheating device 31 is put in communication with the cooking chamber 4 to introduce the superheated steam into the cooking chamber 4, through the inlet opening 34.

In addition to the steam generated by the steam generating device 30, the superheating device 31 also receives the exhausted steam produced in the cooking chamber 4 during operation.

More specifically, the apparatus comprises recirculation means 43, communicating with the cooking chamber 4, which is configured to convey the exhausted steam from the cooking chamber 4 to the superheating device 31, so that the exhausted steam is heated up to the operating temperature T and then inserted again into the cooking chamber 4.

The recirculation means 43 is arranged in the casing 2 and include a recirculation conduit 44, which enables the exhausted steam to flow from the cooking chamber 4 towards the superheating device 31.

The recirculation conduit 44 is connected, at one end, with a recovery opening 45, made on a wall of the cooking chamber 4.

At the opposite end, the recirculation conduit 44 is connected to a connection conduit 46, which conducts the entering steam to the superheating device 31.

A further conduit, which transports the steam from the steam generating device 30 to the superheating device 31, is connected to the connection conduit 46.

It is possible to provide that the recirculation conduit 44 is connected directly to the superheating device 31.

The recovery opening 45 is obtained on a wall of the cooking chamber 4, in a region of the chamber in which the fluid has predetermined fluid dynamic characteristics worse than the fluid dynamic characteristics of the fluid in the remaining regions of the chamber, in a steady state operation phase.

Preferably said thermo-fluid dynamic characteristics include the temperature of the fluid and/or the average speed of the fluid and/or the percentage of oxygen.

From the results of fluid dynamic studies on the fluid circulating in the cooking chamber, in a steady state operating step, it has been observed that the exhausted steam is concentrated in the region or regions where the thermo-fluid dynamic characteristics of the fluid are worse than the corresponding characteristics of the fluid in the remaining regions of the chamber.

It is possible to divide the chamber 4 into a series of regions, characterized by different average values of the thermo-fluid dynamic characteristics of the fluid.

The recovery opening 45 is made, for example, in the region or in one of the regions having the lowest average speed value with respect to the average speed values in the remaining regions of the chamber.

According to an embodiment of the invention, the recovery opening 45 is obtained on the top wall 6 of the cooking chamber 4. In particular, the recovery opening 45 is made near one side of the top wall 6 opposite the connection side with the rear wall 9.

It has been observed in the aforementioned fluid dynamic studies that the positioning of the first exhaust opening 32 and the recovery opening 45 in the regions of the cooking chamber 4 in which the average speed of the fluid is lower prevents the formation of areas of stagnation in chamber 4 and facilitates the circulation of the fluid.

The recirculation conduit 45 comprises a first portion, which develops starting from the recovery opening 45 above the cooking chamber 4, and a second portion, which extends in the region of the casing 2 comprised between the rear wall 9 of the compartment 3 and the casing 2.

A valve means, not shown, suitable for adjusting, on command of the control unit, the quantity of exhausted steam which is conducted to the inlet to the superheating device 31 is associated with the recirculation conduit 44. The valve means are movable, on command of the control unit, between an opening configuration, in which they allow the passage of the exhausted steam from the cooking chamber 4 to the superheating device 31, and a closing configuration, in which they block the passage of the exhausted steam to the superheating device 31.

Preferably, the valve means comprise a valve provided with a shutter which may be actuated by the control unit to regulate the quantity of exhausted steam which passes through the recirculation conduit 44.

The operation of the apparatus for cooking food with superheated steam is easily understood from the foregoing description.

In an initial phase, a user inserts one or more foods to be cooked or heated inside the cooking chamber 4, through the access opening 11, placing them resting on at least one pan.

The user then closes the door 12, in order to isolate the cooking chamber 4 from the external environment.

If the user uses the control panel to select the steam cooking mode, the control unit activates the steam generating device 30 to generate the quantity of steam required to start the apparatus.

The produced steam flows into the superheating device 31 and, when passing through the device 31, is heated up to an operating temperature T.

Preferably the steam is heated to a temperature T between 130° C and 600° C.

The superheated steam passes through the inlet opening 34 in the cooking chamber 4 and is distributed in the chamber 4 independently or by the action of the ventilation device 18.

The superheated steam in the cooking chamber 4 replaces, completely or for the most part, the initially present oxygen, which is expelled out of the cooking chamber 4 through the first discharge opening 32.

In a steady state operating step of the apparatus, essentially steam or steam mixed with further gases, such as nitrogen and oxygen, may be present inside the chamber 4.

Reference is made below only to the exhausted superheated steam as the fluid recovered from the recirculation means, considering however that the recovered fluid may comprise steam together with further gases, as specified above.

From the moment the steam is introduced into the cooking chamber 4, the control unit controls the oxygen concentration measured by the sensor means inside the cooking chamber 4.

If the measured oxygen concentration is lower than an oxygen concentration limit value, the control unit sends a control signal to the valve means to operate them in the open configuration and to make the way for the exhausted steam from the cooking chamber 4 to the superheating device 31. At the same time with the actuation of the valve means in the open configuration, the control unit deactivates the steam generating device 30.

The limit value is a maximum oxygen concentration value below which it is possible to cook food in a healthy way. This limit value is saved in the memory of the control unit.

The exhausted steam is conducted, thanks to the pressure gradient created by the ventilation device 18, inside the recirculation conduit 44 so as to be conveyed to the inlet of the superheating device 31. Exhausted steam passes through the superheating device 31 where it is heated again up to the operating temperature T and is then introduced into the cooking chamber 4 through the inlet opening 34.

The quantity of exhausted steam entering the superheating device is controlled by the control unit through the valve means.

When the oxygen concentration measured by the sensor means exceeds the concentration limit value, the control unit sends a command signal to the sensor means to activate them in the closed configuration and the steam generating device 30 is activated to generate steam to be superheated and to introduce into the cooking chamber 4.

The control unit constantly monitors the oxygen concentration present in the cooking chamber 4 and, based on this data, regulates the quantity of steam necessary to cook the food, using the exhausted steam recovered from the recirculation means 23 and superheated or the steam generated by the steam generator 30 and superheated.

Before the end of the cooking step, the chamber 4 is dried in order to allow comfortable extraction of the food.

The drying step provides for operating the adjusting member of the cooling conduit 28, to enable the air to enter from the outside towards the inside of the chamber 4, through the cooling conduit 28.

The apparatus object of the present invention achieves the aim of reducing energy consumption, since the recovery of the exhausted steam, by means of the recirculation means, allows the user to consume a quantity of energy to bring it to the operating temperature which is lower than the energy necessary to bring the liquid to the state of superheated steam. More specifically, it should be noted that to bring the exhausted steam into the superheating device at operating temperature, it is sufficient to supply it with the energy it previously transferred to the food, while, in order to obtain superheated steam starting from the liquid contained in the device for generating heat, it is necessary to supply the energy to evaporate it and the energy to superheat it. The total energy for evaporation and superheating to be supplied to the liquid is higher than the energy transferred by the exhausted steam to the food.

Furthermore, energy savings are linked to the reduction of the consumption of liquid for generating superheated steam, given that part of the superheated steam is obtained by recovering the exhausted steam.

A relevant effect of the present invention is that the apparatus optimally preserves the nutritional properties of food and its healthiness thanks to the fact that the control unit regulates the generation of superheated steam based on the concentration of oxygen in the cooking chamber, maintaining an oxygen concentration value below a limit value such as to ensure healthy cooking.

The control unit selects whether to generate superheated steam from the exhausted steam or whether to generate new steam from the steam generating device based on the concentration of oxygen present in the cooking chamber, allowing the user to adjust with more accuracy the amount of oxygen in the cooking chamber. In this regard, it is emphasized that the fact that the control unit activates, if necessary, the valve means in the open configuration to make way to superheated steam through the recirculation means to the superheating device allows the user to obtain a rapid response to the variation of oxygen in the cooking chamber as it takes less time to heat the exhausted steam than the time needed to generate new steam and superheat it.

In addition, cooking food using superheated steam enables the nutritional properties and aromas to be better preserved, as superheated steam transfers a considerable amount of heat to food quickly. The reduction of cooking times by superheated steam enables the proteins and vitamins contained in food to be better preserved.

Finally, it is to be considered that the provision of the recirculation means, which recover the exhausted steam to re-energize it, reduces the time necessary to have the superheated steam and therefore to obtain a more efficient apparatus.

The apparatus described by way of example is subject to changes according to different needs.

In the practical embodiment of the invention, the materials used, as well as the shape and the dimensions, may be modified depending on requirements.

Should the technical features mentioned in any claim be followed by reference signs, such reference signs were included strictly with the aim of enhancing the understanding of the claims and hence they shall not be deemed restrictive in any manner whatsoever on the scope of each element identified for exemplifying purposes by such reference signs.

## Claims

1. An apparatus for cooking food with superheated steam comprising
an outer casing (2) comprising a compartment (3) forming a cooking chamber (4), suitable for containing one or more foods, said cooking chamber (4) being suitable for containing, in use, a fluid comprising said superheated steam;
a steam generating device (30), capable of vaporizing a liquid;
a superheating device (31) of said steam associated with said steam generating device (30), said superheating device (31) being configured to heat said steam up to an operating temperature (T) higher than the boiling temperature of said liquid and to allow said superheated steam to come out towards said cooking chamber (4);
a recirculation means (43) of the exhausted steam present, in use, in said cooking chamber (4), said recirculation means (43) being communicating with said cooking chamber (4) and being configured to convey said exhausted steam from said cooking chamber (4) to said superheating device (31), so as to heat said exhausted steam up to said operating temperature (T) and introduce it into said cooking chamber (4);
a control unit comprising an electronic processor and a memory readable by said electronic processor, said memory comprising data relating to the composition of said fluid circulating in said cooking chamber (4), said data comprising the concentration of oxygen present in said cooking chamber, said control unit being configured to control said steam generating device (30) and said superheating device (31) on the basis of said data of concentration of oxygen;
said recirculation means (43) comprise at least one recirculation conduit (44), configured to convey said exhausted steam from said cooking chamber (4) to said superheating device (31), **characterized in that** the apparatus comprises a valve means being associated with said at least one
recirculation conduit (44), said valve means being able to adjust the quantity of exhausted steam to be conveyed into the inlet of said superheating device (31) upon command of said control unit, said control unit being configured to send a control signal to said valve means based on said oxygen concentration measured in said cooking chamber.

2. An apparatus as in claim 1, **characterized in that** it comprises a sensor means, arranged at said cooking chamber (4), configured to acquire data relating to the composition of said fluid circulating in said cooking chamber (4), said sensor means comprising at least one oxygen sensor.

3. An apparatus as in claim 1 or 2, **characterized in that** said at least one recirculation conduit (44) is connected, at one end, to a recovery opening (45) made on a wall of said cooking chamber (4), at a region of said cooking chamber (4) wherein said fluid has worse predetermined thermo-fluid dynamic characteristics than the characteristics of the circulating fluid in the remaining regions of said cooking chamber (4), in a step of steady-state operation of said apparatus, said thermo-fluid dynamic characteristics comprising the temperature and/or the average speed of said fluid and/or the percentage concentration of oxygen.

4. An apparatus as in claim 3, **characterized in that** said recovery opening (45) is made in a region or in one of the regions of said cooking chamber (4) wherein said fluid has the lowest average speed value compared to the average speed values of said fluid in the remaining regions of said cooking chamber (4).

5. An apparatus as in claim 3 or 4, **characterized in that** said recovery opening (45) is made on a top wall (6) of said cooking chamber (4).

6. An apparatus as in any one of the preceding claims, **characterized in that** a distribution region (100) of said fluid is defined between said compartment (3) and said cooking chamber (4), said distribution region (100) forming a path for guiding the flow of said fluid towards said cooking chamber (4), said apparatus comprising a ventilation device (18) arranged in said distribution region (100), said ventilation device (18) being operable to circulate said fluid in said cooking chamber (4) and said ventilation device (18) creating, in use, a pressure gradient in said cooking chamber (4) which conveys said exhausted steam into said recirculation means (23).

7. An apparatus as in any one of the preceding claims, **characterized in that** said compartment (3) has a trapezoidal cross section.

8. An apparatus as in claim 7, **characterized in that** said compartment (3) has rounded corners to avoid the formation of areas of oxygen stagnation and to minimize the volume of said compartment (3).

9. An apparatus as in any one of the preceding claims, **characterized in that** said superheating device (31) is arranged outside said compartment (3).

10. A method for generating steam comprising the following steps:
a. providing an apparatus as in any one of the preceding claims;
b. generating the steam by means of said steam generation device, at an early stage;
c. measuring the oxygen concentration present in said cooking chamber;
d. if the oxygen concentration measured in said cooking chamber (4) is lower than an oxygen concentration limit value stored in said memory of said control unit, deactivating said steam generating device (30) and at the same time sending a control signal to said valve means, via said control unit, for operating it in an open configuration, suitable for allowing the passage of exhausted steam from said cooking chamber to said superheating device (31) and
e. heating said exhausted steam by means of said superheating device (31) to insert it back to said cooking chamber (4);
f. if the oxygen concentration measured in said cooking chamber (4) is higher than said limit value of oxygen concentration stored in said memory, sending a control signal to said valve means, by means of said control unit, to operate it in a closed configuration, capable of blocking the passage of exhausted steam from said cooking chamber to said superheating device (31) and activating said steam generating device (30) to generate new steam and
g. heating said steam by means of said superheating device (31) to introduce it into said cooking chamber (4);
h. repeating the steps c-g until the cooking process is complete.

11. A computer program comprising instructions which, when executed by the electronic processor, cause the apparatus according to any one of the claims 1-9 to perform the steps b-h of the method, according to claim 10.

## Patentansprüche

1. Gerät zum Garen von Lebensmitteln mit überhitztem Dampf, umfassend ein Außengehäuse (2), das einen Raum (3) umfasst, der eine Garkammer (4) bildet, die dazu geeignet ist, ein oder mehrere Lebensmittel zu enthalten, wobei die Garkammer (4) dazu geeignet ist, bei Verwendung ein Fluid zu enthalten, das den überhitzten Dampf umfasst;
eine Dampferzeugungsvorrichtung (30), die in der Lage ist, eine Flüssigkeit zu verdampfen;
eine Überhitzungsvorrichtung (31) des Dampfes, die mit der Dampferzeugungsvorrichtung (30) assoziiert ist, wobei die Überhitzungsvorrichtung (31) konfiguriert ist, um den Dampf auf eine Betriebstemperatur (T) zu erhitzen, die höher als die Siedetemperatur der Flüssigkeit ist, und um zu erlauben, dass der überhitzte Dampf in Richtung der Garkammer (4) herauskommt;
eine Rezirkulationseinrichtung (43) des verbrauchten Dampfes, der bei Verwendung in der Garkammer (4) vorhanden ist, wobei die Rezirkulationseinrichtung (43) mit der Garkammer (4) in Verbindung steht und konfiguriert ist, um den verbrauchten Dampf aus der Garkammer (4) zu der Überhitzungsvorrichtung (31) zu fördern, um den verbrauchten Dampf auf die Betriebstemperatur (T) zu erhitzen und ihn in die Garkammer (4) einzuführen;
eine Steuereinheit, die einen elektronischen Prozessor und einen Speicher umfasst, der von dem elektronischen Prozessor lesbar ist, wobei der Speicher Daten umfasst, die die Zusammensetzung des Fluids, das in der Garkammer (4) zirkuliert, betreffen, wobei die Daten die Sauerstoffkonzentration umfassen, die in der Garkammer vorhanden ist, wobei die Steuereinheit konfiguriert ist, um die Dampferzeugungsvorrichtung (30) und die Überhitzungsvorrichtung (31) auf der Basis der Daten der Sauerstoffkonzentration zu steuern;
die Rezirkulationseinrichtung (43) mindestens eine Rezirkulationsleitung (44) umfasst, die konfiguriert ist, um den verbrauchten Dampf aus der Garkammer (4) zu der Überhitzungsvorrichtung (31) zu fördern, **dadurch gekennzeichnet, dass** das Gerät eine Ventileinrichtung umfasst, die mit der mindestens einen Rezirkulationsleitung (44) assoziiert ist, wobei die Ventileinrichtung in der Lage ist, die Menge an verbrauchtem Dampf, die in den Einlass der Überhitzungsvorrichtung (31) gefördert werden soll, auf Befehl der Steuereinheit einzustellen, wobei die Steuereinheit konfiguriert ist, um ein Steuersignal an die Ventileinrichtung basierend auf der Sauerstoffkonzentration, die in der Garkammer gemessen wird, zu senden

2. Gerät nach Anspruch 1, **dadurch gekennzeichnet, dass** es eine Sensoreinrichtung umfasst, die an der Garkammer (4) eingerichtet ist, die konfiguriert ist, um Daten zu erheben, die die Zusammensetzung des Fluids, das in der Garkammer (4) zirkuliert, betreffen, wobei die Sensoreinrichtung mindestens einen Sauerstoffsensor umfasst.

3. Gerät nach Anspruch 1 oder 2, **dadurch gekennzeichnet, dass** die mindestens eine Rezirkulationsleitung (44) an einem Ende mit einer Rückgewinnungsöffnung (45) verbunden ist, die an einer Wand der Garkammer (4) in einem Bereich der Garkammer (4) hergestellt ist, wobei das Fluid bei einem Schritt des stationären Betriebs des Geräts schlechtere vorbestimmte dynamische Thermofluidmerkmale als die Merkmale des zirkulierenden Fluids in den verbleibenden Bereichen der Garkammer (4) aufweist, wobei die dynamischen Thermofluidmerkmale die Temperatur und/oder die Durchschnittsgeschwindigkeit des Fluids und/oder die prozentuale Sauerstoffkonzentration umfassen.

4. Gerät nach Anspruch 3, **dadurch gekennzeichnet, dass** die Rückgewinnungsöffnung (45) in einem Bereich oder in einem der Bereiche der Garkammer (4) hergestellt ist, in dem das Fluid den niedrigsten Durchschnittsgeschwindigkeitswert im Vergleich zu den Durchschnittsgeschwindigkeitswerten des Fluids in den verbleibenden Bereichen der Garkammer (4) aufweist.

5. Gerät nach Anspruch 3 oder 4, **dadurch gekennzeichnet, dass** die Rückgewinnungsöffnung (45) an einer oberen Wand (6) der Garkammer (4) hergestellt ist.

6. Gerät nach einem der vorstehenden Ansprüche, **dadurch gekennzeichnet, dass** ein Verteilungsbereich (100) des Fluids zwischen dem Raum (3) und der Garkammer (4) definiert ist, wobei der Verteilungsbereich (100) einen Weg zum Führen des Stroms des Fluids in Richtung der Garkammer (4) bildet, wobei das Gerät eine Belüftungsvorrichtung (18) umfasst, die in dem Verteilungsbereich (100) eingerichtet ist, wobei die Belüftungseinrichtung (18) betreibbar ist, um das Fluid in der Garkammer (4) zu zirkulieren, und wobei die Belüftungseinrichtung (18) bei Verwendung einen Druckgradienten in der Garkammer (4) schafft, der den verbrauchten Dampf in Rezirkulationseinrichtung (23) befördert.

7. Gerät nach einem der vorstehenden Ansprüche, **dadurch gekennzeichnet, dass** der Raum (3) einen trapezförmigen Querschnitt aufweist.

8. Gerät nach Anspruch 7, **dadurch gekennzeichnet, dass** die Kammer (3) abgerundete Ecken aufweist, um die Bildung von Bereichen mit Sauerstoffstagnation zu vermeiden und das Volumen des Raums (3) zu minimieren.

9. Gerät nach einem der vorstehenden Ansprüche, **dadurch gekennzeichnet, dass** die Überhitzungsvorrichtung (31) außerhalb des Raums (3) eingerichtet ist.

10. Verfahren zur Erzeugung von Dampf, das die folgenden Schritte umfasst:
a. Bereitstellen eines Geräts nach einem der vorstehenden Ansprüche;
b. Erzeugen des Dampfes mittels der Dampferzeugungsvorrichtung in einem frühen Stadium;
c. Messen der Sauerstoffkonzentration, die in der Garkammer vorhanden ist;
d. falls die Sauerstoffkonzentration, die in der Garkammer (4) gemessen wird, niedriger als ein Sauerstoffkonzentrationsgrenzwert ist, der in dem Speicher der Steuereinheit gespeichert ist, Deaktivieren der Dampferzeugungsvorrichtung (30) und gleichzeitig Senden eines Steuersignals an die Ventileinrichtung über die Steuereinheit, um sie in einer offenen Konfiguration zu betreiben, die geeignet ist, um den Durchgang von verbrauchtem Dampf aus der Garkammer zu der Überhitzungsvorrichtung (31) zu erlauben, und
e. Erhitzen des verbrauchten Dampfes mittels der Überhitzungsvorrichtung (31), um ihn zurück in die Garkammer (4) einzuführen;
f. falls die Sauerstoffkonzentration, die in der Garkammer (4) gemessen wird, höher als der Sauerstoffkonzentrationsgrenzwert ist, der in dem Speicher gespeichert ist, Senden eines Steuersignals an die Ventileinrichtung mittels der Steuereinheit, um sie in einer geschlossenen Konfiguration zu betreiben, die in der Lage ist, den Durchgang von verbrauchten Dampf aus der Garkammer zu der Überhitzungsvorrichtung (31) zu blockieren, und Aktivieren der Dampferzeugungsvorrichtung (30), um neuen Dampf zu erzeugen, und
g. Erhitzen des Dampfes mittels der Überhitzungsvorrichtung (31), um ihn in die Garkammer (4) einzuführen;
h. Wiederholen der Schritte c-g, bis der Garprozess abgeschlossen ist.

11. Computerprogramm, das Anweisungen umfasst, die, wenn sie von dem elektronischen Prozessor ausgeführt werden, das Gerät nach einem der Ansprüche 1-9 veranlassen, die Schritte b-h des Verfahrens nach Anspruch 10 durchzuführen.

## Revendications

1. Appareil pour cuire des aliments avec de la vapeur surchauffée comprenant
une enveloppe extérieure (2) comprenant un compartiment (3) formant une chambre de cuisson (4), apte à contenir un ou plusieurs aliments, ladite chambre de cuisson (4) étant apte à contenir, en utilisation, un fluide comprenant ladite vapeur surchauffée ;
un dispositif de génération de vapeur (30), capable de vaporiser un liquide ;
un dispositif de surchauffe (31) de ladite vapeur associé audit dispositif de génération de vapeur (30), ledit dispositif de surchauffe (31) étant configuré pour chauffer ladite vapeur jusqu'à une température de fonctionnement (T) supérieure à la température d'ébullition dudit liquide et pour permettre à ladite vapeur surchauffée de sortir vers ladite chambre de cuisson (4) ;
des moyens de recirculation (43) de la vapeur évacuée présente, en utilisation, dans ladite chambre de cuisson (4), lesdits moyens de recirculation (43) communiquant avec ladite chambre de cuisson (4) et étant configurés pour transporter ladite vapeur évacuée de ladite chambre de cuisson (4) audit dispositif de surchauffe (31), de manière à chauffer ladite vapeur évacuée jusqu'à ladite température de fonctionnement (T) et à l'introduire dans ladite chambre de cuisson (4) ;
une unité de commande comprenant un processeur électronique et une mémoire lisible par ledit processeur électronique, ladite mémoire comprenant des données relatives à la composition dudit fluide circulant dans ladite chambre de cuisson (4), lesdites données comprenant la concentration en oxygène présente dans ladite chambre de cuisson, ladite unité de commande étant configurée pour commander ledit dispositif de génération de vapeur (30) et ledit dispositif de surchauffe (31) sur la base desdites données de concentration en oxygène ;
lesdits moyens de recirculation (43) comprennent au moins un conduit de recirculation (44), configuré pour transporter ladite vapeur évacuée de ladite chambre de cuisson (4) vers ledit dispositif de surchauffe (31), **caractérisé en ce que** l'appareil comprend des moyens de soupape associés audit au moins un conduit de recirculation (44), lesdits moyens de soupape étant capables d'ajuster la quantité de vapeur évacuée à transporter dans l'entrée dudit dispositif de surchauffe (31) sur commande de ladite unité de commande, ladite unité de commande étant configurée pour envoyer un signal de commande auxdits moyens de soupape sur la base de ladite concentration en oxygène mesurée dans ladite chambre de cuisson

2. Appareil selon la revendication 1, **caractérisé en ce qu'**il comprend des moyens de capteur, agencés au niveau de ladite chambre de cuisson (4), configurés pour acquérir des données relatives à la composition dudit fluide circulant dans ladite chambre de cuisson (4), lesdits moyens de capteur comprenant au moins un capteur d'oxygène.

3. Appareil selon la revendication 1 ou 2, **caractérisé en ce que** ledit au moins un conduit de recirculation (44) est relié, à une extrémité, à une ouverture de récupération (45) réalisée sur une paroi de ladite chambre de cuisson (4), au niveau d'une région de ladite chambre de cuisson (4), dans lequel ledit fluide a des caractéristiques dynamiques de thermofluide prédéterminées pires que les caractéristiques du fluide de circulation dans les régions restantes de ladite chambre de cuisson (4), dans une étape de fonctionnement en régime permanent dudit appareil, lesdites caractéristiques dynamiques de thermofluide comprenant la température et/ou la vitesse moyenne dudit fluide et/ou la concentration en pourcentage en oxygène.

4. Appareil selon la revendication 3, **caractérisé en ce que** ladite ouverture de récupération (45) est réalisée dans une région ou dans l'une des régions de ladite chambre de cuisson (4) dans laquelle ledit fluide a la valeur de vitesse moyenne la plus basse comparée aux valeurs de vitesse moyenne dudit fluide dans les régions restantes de ladite chambre de cuisson (4).

5. Appareil selon la revendication 3 ou 4, **caractérisé en ce que** ladite ouverture de récupération (45) est réalisée dans une paroi supérieure (6) de ladite chambre de cuisson (4).

6. Appareil selon l'une quelconque des revendications précédentes, **caractérisé en ce qu'**une région de distribution (100) dudit fluide est définie entre ledit compartiment (3) et ladite chambre de cuisson (4), ladite région de distribution (100) formant un chemin pour guider l'écoulement dudit fluide vers ladite chambre de cuisson (4), ledit appareil comprenant un dispositif de ventilation (18) agencé dans ladite région de distribution (100), ledit dispositif de ventilation (18) pouvant fonctionner pour faire circuler ledit fluide dans ladite chambre de cuisson (4) et ledit dispositif de ventilation (18) créant, en utilisation, un gradient de pression dans ladite chambre de cuisson (4) qui transporte ladite vapeur évacuée dans lesdits moyens de recirculation (23).

7. Appareil selon l'une quelconque des revendications précédentes, **caractérisé en ce que** ledit compartiment (3) a une section transversale trapézoïdale.

8. Appareil selon la revendication 7, **caractérisé en ce que** ledit compartiment (3) a des coins arrondis pour éviter la formation de zones de stagnation d'oxygène et pour minimiser le volume dudit compartiment (3).

9. Appareil selon l'une quelconque des revendications précédentes, **caractérisé en ce que** ledit dispositif de surchauffe (31) est disposé à l'extérieur dudit compartiment (3).

10. Procédé de génération de vapeur comprenant les étapes suivantes :
a. fournir un appareil selon l'une quelconque des revendications précédentes ;
b. générer la vapeur au moyen dudit dispositif de génération de vapeur, à un stade précoce ;
c. mesurer la concentration en oxygène présente dans ladite chambre de cuisson ;
d. si la concentration en oxygène mesurée dans ladite chambre de cuisson (4) est inférieure à une valeur limite de concentration en oxygène stockée dans ladite mémoire de ladite unité de commande, désactiver ledit dispositif de génération de vapeur (30) et en même temps envoyer un signal de commande auxdits moyens de soupape, via ladite unité de commande, pour le faire fonctionner dans une configuration ouverte, apte à permettre le passage de la vapeur évacuée de ladite chambre de cuisson vers ledit dispositif de surchauffe (31) et
e. chauffer ladite vapeur évacuée au moyen dudit dispositif de surchauffe (31) pour l'insérer de nouveau dans ladite chambre de cuisson (4) ;
f. si la concentration en oxygène mesurée dans ladite chambre de cuisson (4) est supérieure à ladite valeur limite de concentration en oxygène stockée dans ladite mémoire, envoyer un signal de commande auxdits moyens de soupape, au moyen de ladite unité de commande, pour le faire fonctionner dans une configuration fermée, capable de bloquer le passage de la vapeur évacuée de ladite chambre de cuisson vers ledit dispositif de surchauffe (31) et d'activer ledit dispositif de génération de vapeur (30) pour générer de la nouvelle vapeur et
g. chauffer ladite vapeur au moyen dudit dispositif de surchauffe (31) pour l'introduire dans ladite chambre de cuisson (4) ;
h. répéter les étapes c-g jusqu'à ce que le processus de cuisson soit terminé.

11. Programme informatique comprenant des instructions qui, lorsqu'elles sont exécutées par le processeur électronique, amènent l'appareil selon l'une quelconque des revendications 1 à 9 à exécuter les étapes b-h du procédé, selon la revendication 10.
